# EUROPÄISCHE PATENTANMELDUNG

(11) **EP 1 176 495 A2**
(43) Veröffentlichungstag der Anmeldung: **30.01.2002**
(21) Anmeldenummer: 01117536.1
(22) Anmeldetag: 20.07.2001
(51) Int. Cl.: G06F 1/16

(54) **Internet-Endgerät und Tastatur für das Internet-Endgerät**

(30) Priorität: 25.07.2000 DE 20012863 U
(71) Anmelder: Dosch & Amand GmbH & Co. KG, 81679 München (DE)
(72) Erfinder:
(74) Vertreter: Grünecker, Kinkeldey, Stockmair & Schwanhäusser Anwaltssozietät

(57) **Zusammenfassung**

System (10), umfassend ein Internet-Endgerät (20) und eine koppelbare Tastatur (30), wobei:
das Internet-Endgerät (20), das vorzugsweise als WebPad ausgeführt ist, umfasst:
   eine berührungsempfindliche Anzeige (21),
   eine Einrichtung (22) zur Kopplung der Tastatur (30),
   eine Einrichtung (23) zur Kommunikation mit der Tastatur (30), und
   eine Einrichtung (24) zum Aufnehmen von Energie zum Betreiben des Internet-Endgeräts (20) von der Tastatur (30), und
die Tastatur (30) umfasst:
   eine Vielzahl von Tasten (31) zur Aufnahme von Eingaben eines Anwenders,
   eine Einrichtung (32) zur Kopplung des Internet-Endgeräts (20), die so ausgebildet ist, dass der Anwender die Tasten (31) betätigen und gleichzeitig die Anzeige (21) betrachten kann,
   eine Einrichtung (33) zur Kommunikation mit dem Internet-Endgerät (20),
   eine Einrichtung (34) zur Aufnahme von Energie aus einem Stromnetz, und
eine Einrichtung (35) zum Abgeben von Energie an das Internet-Endgerät (20).

## Beschreibung

Die Erfindung betrifft ein Internet-Endgerät (Internet Terminal) und eine Tastatur (Keyboard) zur Verwendung mit dem Internet-Endgerät. Insbesondere betrifft die Erfindung ein mobiles Internet-Endgerät, im folgenden auch als WebPad bezeichnet.

Ein wachsendes Interesse von Computeranwendern am Internet führt zu Computern, die speziell auf das Internet abgestimmt sind. Diese speziellen Computer, im folgenden auch als Internet-Endgeräte bezeichnet, sollen einem Anwender die Nutzung des Internets so einfach und intuitiv wie möglich machen.

Gemäß dem Stand der Technik umfasst ein Internet-Endgerät beispielsweise eine Tastatur mit spezifischen Tasten oder eine Computermaus mit zusätzlichen Rädchen, die das Navigieren im Internet vereinfachen. Andere Internet-Endgeräte gemäß dem Stand der Technik umfassen jeweils eine berührungsempfindliche Anzeige, die das Navigieren durch direkte Auswahl auf der Anzeige ermöglichen. Um einer steigenden Mobilität der Anwender Rechnung zu tragen, werden Internet-Endgeräte tragbar und schnurlos. Solche mobilen Internet-Endgeräte sind kompakt und im wesentlichen flach, und werden daher auch als WebPads bezeichnet. Da diese mobilen Internet-Endgeräte aus Platzgründen, Gewichtsgründen und vor allem Kostengründen oftmals kein herkömmliches Tastenfeld aufweisen, ist komfortables Arbeiten bei schreibintensiven Tätigkeiten kaum möglich. Weiterhin ist die Stromversorgung für längeres Arbeiten oft ungenügend. Weiterhin sind Einrichtungen zum Speichern von größeren Datenmengen und Informationen bei mobilen Internet-Endgeräten aus Gründen von Kosten, Größe, Gewicht und Stromverbrauch erheblich eingeschränkt oder gar nicht vorhanden. Daher ist es für einige Anwender erforderlich, sowohl ein stationäres Internet-Endgerät als auch ein mobiles Internet-Endgerät anzuschaffen.

Es ist daher die Aufgabe der Erfindung, ein System bereitzustellen, das stationäres komfortables und andauerndes Arbeiten mit einem mobilen Internet-Endgerät ermöglicht.

Diese Aufgabe wird durch den Gegenstand des unabhängigen Anspruchs 1 erfindungsgemäß gelöst. Bevorzugte Ausgestaltungen der Erfindung sind Gegenstände der abhängigen Ansprüche.

Gemäß einem ersten Aspekt der Erfindung umfasst ein System ein Internet-Endgerät und eine koppelbare Tastatur, wobei das Internet-Endgerät, das vorzugsweise als WebPad ausgeführt ist, eine berührungsempfindliche Anzeige, eine Einrichtung zur Kopplung der Tastatur, eine Einrichtung zur Kommunikation mit der Tastatur und eine Einrichtung zum Aufnehmen von Energie zum Betreiben des Internet-Endgeräts von der Tastatur umfasst, und die Tastatur eine Vielzahl von Tasten zur Aufnahme von Eingaben eines Anwenders, eine Einrichtung zur Kopplung des Internet-Endgeräts, die so ausgebildet ist, dass der Anwender die Tasten betätigen und gleichzeitig die Anzeige betrachten kann, eine Einrichtung zur Kommunikation mit dem Internet-Endgerät, eine Einrichtung zur Aufnahme von Energie aus einem Stromnetz, und eine Einrichtung zum Abgeben von Energie an das Internet-Endgerät umfasst.

Gemäß einem zweitem Aspekt erfolgt die Kommunikation zwischen dem Internet-Endgerät und der Tastatur kontaktlos.

Gemäß einem dritten Aspekt erfolgt das Abgeben von Energie an das Internet-Endgerät und das Aufnehmen der Energie von der Tastatur kontaktlos.

Gemäß einem vierten Aspekt umfasst das System weiterhin eine Basisstation, die zum Anschluss an ein Telefonnetz geeignet ist, zur drahtlosen Kommunikation, vorzugsweise gemäß dem DECT- (Digital European Cordless Telecommunication-) Standard, wobei das Internet-Endgerät weiterhin eine Einrichtung zur drahtlosen Kommunikation mit der Basisstation umfasst.

Gemäß einem fünften Aspekt umfasst die Tastatur weiterhin eine Einrichtung zum Speichern von Energie.

Gemäß einem sechsten Aspekt umfasst die Einrichtung zur Kopplung des Internet-Endgeräts Mittel, die das gekoppelte Internet-Endgerät seitlich zumindest teilweise umschließen.

Gemäß einem siebten Aspekt umfasst die Einrichtung zur Kopplung des Internet-Endgeräts Mittel, die ein Schwenken des Internet-Endgeräts ermöglichen.

Gemäß einem achten Aspekt bestimmt eine Schnittlinie einer ersten Ebene, die durch die Vielzahl der Tasten bestimmt ist, und einer zweiten Ebene, die durch die Anzeige bestimmt ist, im wesentlichen eine Achse, um die das Schwenken erfolgt.

Gemäß einem neunten Aspekt umfasst die Einrichtung zur Kopplung des Internet-Endgeräts Mittel, die eine relative Lage des gekoppelten Internet-Endgeräts und der Tastatur beibehalten.

Gemäß einem zehnten Aspekt umfasst die Tastatur weiterhin eine Einrichtung zum Speichern von großen Datenmengen, vorzugsweise ein Festplattenlaufwerk.

Gemäß einem elften Aspekt umfasst die Tastatur weiterhin eine Einrichtung zum Einlesen von Daten und Programmen, vorzugsweise ein CD-ROM Laufwerk, so dass über diese Einrichtung auch der Upgrade bzw. Update der Betriebssoftware des Internet-Endgeräts problemlos möglich ist.

Im folgenden werden Vorteile sowie bevorzugte Ausführungsformen der Erfindung unter Bezugnahme auf die beigefügten Zeichnungen näher erläutert. Dabei zeigen die Zeichnungen im einzelnen:
Fig. 1 eine schematische Darstellung eines Internet-Endgeräts und einer Tastatur, die gemäß einer bevorzugten Ausführungsform der Erfindung ausgeführt sind, und
Fig. 2 eine schematische Darstellung des Internet-Endgeräts und der Tastatur, die gemäß der bevorzugten Ausführungsform gekoppelt sind.

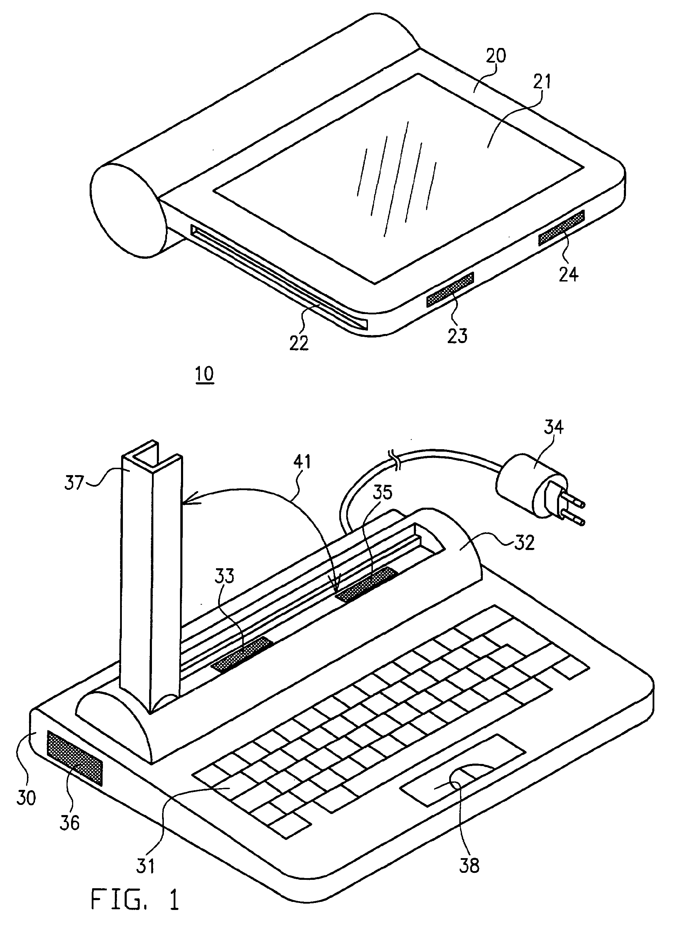

Fig. 1 zeigt ein System 10 umfassend das Internet-Endgerät 20 und die Tastatur 30 gemäß der bevorzugten Ausführungsform der Erfindung. Das Internet-Endgerät 20 umfasst eine berührungsempfindliche Anzeige 21, eine Einrichtung 22 zur Kopplung der Tastatur 30, eine Einrichtung 23 zur Kommunikation mit der Tastatur 30, und eine Einrichtung 24 zum Aufnehmen von Energie zum Betreiben des Internet-Endgeräts 20 von der Tastatur 30. Wie in Fig. 1 gezeigt, wird die berührungsempfindliche Anzeige 21 von einem Gehäuse des Internet-Endgeräts 20 rahmenartig umschlossen. Somit kann der Anwender das Internet-Endgerät 20 vor sich, beispielsweise auf einem Tisch, ablegen und den Inhalt der Anzeige 21 studieren. Durch entsprechende Formgebung des Gehäuses kann eine geringfügige Neigung der Anzeige 21 erreicht werden, wodurch die Lesbarkeit der Anzeige 21 verbessert werden kann.

Das Internet-Endgerät 20 weist weiterhin einen Prozessor und Speicher auf. In einem nichtflüchtigen Teil des Speichers befindet sich ein Betriebssystem, beispielsweise auf der Basis von Linux, und ein Internet-Browser. Vorzugsweise umfasst das Internet-Endgerät 20 ein Betriebssystem, das augenblicklich startet (instant-on Operating System). Das Internet-Endgerät 20 umfasst weiterhin eine Stromversorgung, die vorzugsweise als Akkumulator ausgeführt ist. Das Internet-Endgerät 20 kann außerdem eine Einrichtung zum Aufnehmen von Betriebsenergie von einer externen Stromversorgung umfassen. Das Internet-Endgerät 20 kann weiterhin Standardschnittstellen, vorzugsweise eine Schnittstelle im USB- (Universal Serial Bus-) Standard zum Anschluss von Peripheriegeräten wie Druckern, Laufwerken und Kommunikationsmodems, eine Einrichtung zum Laden des Akkumulators, Kamera und andere herkömmliche Computereinrichtungen umfassen.

Das Internet-Endgerät 20 kann weiterhin eine Einrichtung zur Kommunikation mit einem koppelbaren Identifikationsmodul (Subscriber Information Module, SIM), beispielsweise einer kontaktbehafteten Chipkarte oder einem kontaktlosen Transponder, umfassen. Weiterhin kann das Internet-Endgerät 20 eine Einrichtung zur Kommunikation mit einem Kommunikationsnetz umfassen, wobei die Einrichtung als Schnittstelle zwischen dem Internet-Endgerät 20 und dem Kommunikationsnetz, das eine Verbindung zum Internet ermöglicht, dient. Bei dem Kommunikationsnetz kann es sich um ein öffentliches Telefonfestnetz oder Mobilfunknetz handeln. Alternativ kann das Internet-Endgerät 20 über die Einrichtung mit einem Computernetzwerk, beispielsweise einem lokalen Netz (Local-Area Network, LAN) oder weiträumigem Netz (Wide-Area Network, WAN) verbunden werden. Die Ausgestaltung der Einrichtung richtet sich dabei nach den Merkmalen des jeweiligen Kommunikationsnetzes. Die Schnittstelle kann drahtgebunden oder drahtlos ausgeführt sein. Bei der Einrichtung kann es sich alternativ um eine herkömmliche serielle, parallele oder USB-Schnittstelle oder dergleichen handeln, wobei die Verbindung mit dem, beispielsweise, öffentlichen Telefonfestnetz über ein Modem erfolgen kann. Bei dem öffentlichen Telefonfestnetz kann es sich sowohl um ein analoges als auch ein digitales und insbesondere ein ISDN-Telefonsystem handeln.

Die Tastatur 30 ist als Dockstation (Docking Station) ausgeführt und umfasst eine Vielzahl von Tasten 31 zur Aufnahme von Eingaben eines Anwenders, eine Einrichtung 32 zur Kopplung des Internet-Endgeräts 20, die so ausgebildet ist, dass der Anwender die Tasten 31 betätigen und gleichzeitig die Anzeige 21 betrachten kann, eine Einrichtung 33, vorzugsweise gemäß dem USB-Standard, zur Kommunikation mit dem Internet-Endgerät 20, eine Einrichtung 34 zur Aufnahme von Energie aus einem Stromnetz, die vorzugsweise als Steckernetzteil ausgeführt ist, und eine Einrichtung 35 zum Abgeben von Energie an das Internet-Endgerät 20. Wie in Fig. 1 gezeigt, werden die Tasten 31, die in einem für Computer üblichen Tastenfeld angeordnet sind, von einem Gehäuse der Tastatur 30 rahmenartig umschlossen. Die Einrichtung 32 zur Kopplung des Internet-Endgeräts 20 schließt sich an einen oberen Rand des Tastenfelds an. Die Tastatur 30 ist im wesentlichen flach und ermöglicht vorteilhafterweise ergonomisches Schreiben.

Die Tastatur 30 kann weiterhin eine Stromversorgung 36 umfassen, die vorzugsweise als Akkumulator ausgeführt wird. Die Tastatur 30 kann weiterhin ein Berührungsfeld 38 (Touch Pad) umfassen.

Die Tastatur 30 kann weiterhin eine Einrichtung zum Speichern und Abrufen großer Datenmengen enthalten, die die Funktionalität und den Leistungsumfang des Internet-Endgeräts 20 erweitern. Solche Datenspeicher sind vorzugsweise Festplattenlaufwerke zum Speichern und Lesen von Daten und CD-ROM Laufwerke zum Lesen von Daten. Letzteres kann auch für ein Upgrade oder Update von Betriebssoftware des Internet-Endgeräts verwendet werden.

Die Einrichtung 32 zur Kopplung des Internet-Endgeräts 20 ist zur teilweisen Aufnahme des Internet-Endgeräts 20 geeignet. Vorzugsweise ist die Einrichtung 32 so ausgeführt, dass sie einen Teil des Gehäuses des Internet-Endgeräts 20, der an einen unteren Rand der Anzeige 21 angrenzt, aufnimmt und zumindest teilweise umschließt. Dazu sind die Ausformungen der Einrichtung 32 zur Kopplung des Internet-Endgeräts 20 und des Teils des Gehäuses aufeinander abgestimmt. Die Kopplung des Internet-Endgeräts 20 und der Tastatur 30 kann vorzugsweise rastbar erfolgen. Die Einrichtung 32 zur Kopplung des Internet-Endgeräts 20 umfasst vorzugsweise weiterhin Mittel 37, die ein gekoppelte Internet-Endgerät 20 seitlich zumindest teilweise umschließen. In der bevorzugten Ausführungsform sind diese Mittel 37 als Schwenkarm, der raumsparend in die Einrichtung 32 zur Kopplung in der Bewegungsrichtung 41 einklappbar ist, ausgeführt. Der Schwenkarm ist so ausgeführt, dass er mit der Einrichtung 22 des Internet-Endgeräts 20 zur Kopplung der Tastatur 30 verbindbar ist. Dazu sind die Ausformungen des Schwenkarms und der Einrichtung 22 zur Kopplung der Tastatur 30 aufeinander abgestimmt.

Die Einrichtung 23 des Internet-Endgeräts 20 zur Kommunikation mit der Tastatur 30 und die Einrichtung 33 der Tastatur 30 zur Kommunikation mit dem Internet-Endgerät 20 können kontaktlos oder kontaktbehaftet miteinander verbindbar sein. Eine kontaktlose Kommunikation kann beispielsweise durch optische oder induktive Kopplung erfolgen. Die Einrichtungen 23 und 33 sind in dem Internet-Endgerät 20 bzw. der Tastatur 30 vorzugsweise so angeordnet, dass sie sich gegenüber stehen, wenn das Internet-Endgerät 20 mit der Tastatur 30 gekoppelt ist. Alternativ kann die Kommunikation per Funk, d. h. mittels Radiowellen, erfolgen.

Die Einrichtung 24 des Internet-Endgeräts 20 zum Aufnehmen von Energie zum Betreiben des Internet-Endgeräts 20 von der Tastatur 30 und die Einrichtung 35 der Tastatur 30 zum Abgeben von Energie an das Internet-Endgerät 20 können kontaktlos oder kontaktbehaftet miteinander verbindbar sein. Eine kontaktlose Übertragung kann beispielsweise durch induktive Kopplung erfolgen. Die Einrichtungen 24 und 35 sind in dem Internet-Endgerät 20 bzw. der Tastatur 30 vorzugsweise so angeordnet, dass sie sich gegenüber stehen, wenn das Internet-Endgerät 20 mit der Tastatur 30 gekoppelt ist.

Das Internet-Endgerät 20 und die Tastatur 30 können weitere Einrichtungen zur gegenseitigen Kommunikation umfassen. In der bevorzugten Ausführungsform kann die Kommunikation mit dem Kommunikationsnetz wahlweise über die Tastatur 30 erfolgen, so dass beispielsweise eine drahtlose Kommunikation zwischen dem Internet-Endgerät 20 und einer Basisstation des Kommunikationsnetzes erfolgt, wenn das Internet-Endgerät 20 nicht mit der Tastatur 30 gekoppelt ist und eine drahtgebundene Kommunikation zwischen der Tastatur 30 und dem Kommunikationsnetz erfolgt, wenn das Internet-Endgerät 20 mit der Tastatur 30 gekoppelt ist.

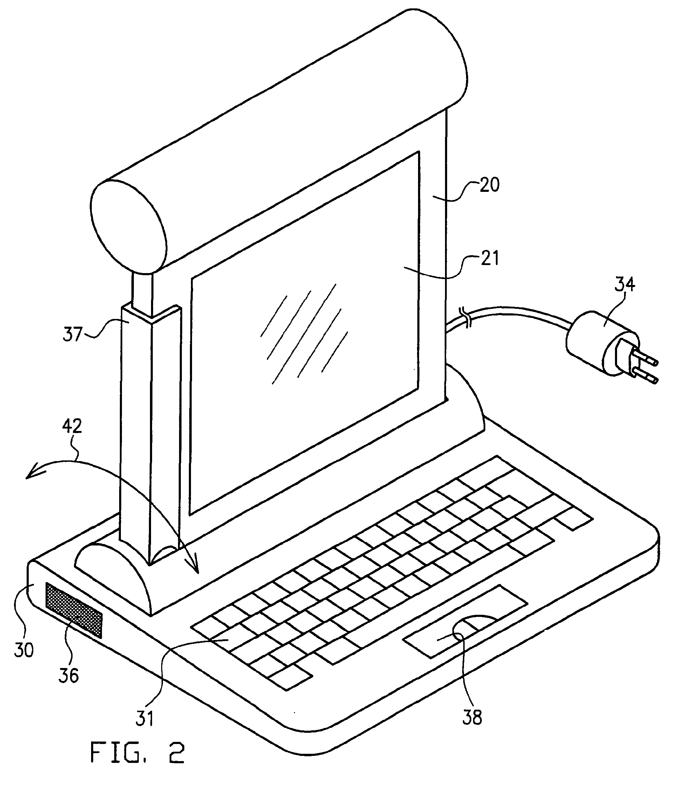

Fig. 2 zeigt das System 10, wobei das Internet-Endgerät 20 und die Tastatur 30 gekoppelt sind. Die Einrichtung 32 der Tastatur 30 zur Kopplung des Internet-Endgeräts 20 umschließt den unteren Teil des Gehäuses des Internet-Endgeräts 20. Der Schwenkarm 37 der Tastatur 30 umschließt zusätzlich einen seitlichen (hier linken) Teil des Gehäuses des Internet-Endgeräts 20. Alternativ kann das Internet-Endgerät 20 Führungen aufweisen, die sich vorzugsweise im Inneren des Internet-Endgeräts 20 befinden und entsprechende Arme aufnehmen, die die Einrichtung 32 der Tastatur 30 zur Kopplung des Internet-Endgeräts 20 aufweist.

Die Einrichtung 23 des Internet-Endgeräts 20 zur Kommunikation mit der Tastatur 30 und die Einrichtung 33 der Tastatur 30 zur Kommunikation mit dem Internet-Endgerät 20 können miteinander kommunizieren. Diese Datenschnittstelle ist vorzugsweise im USB-Standard ausgelegt und dient einerseits zur Übertragung von Tastatursignalen an das Internet-Endgerät, die den Inhalt der Anzeige 21 beeinflussen, und andererseits zur Übertragung von Daten aus dem Kommunikationsnetz (über die Basisstation) auf die Speichereinrichtung (beim Empfangen) bzw. zur Übertragung von Daten aus der Speichereinrichtung in das Kommunikationsnetz (beim Senden). Die Einrichtung 24 des Internet-Endgeräts 20 zum Aufnehmen von Energie zum Betreiben des Internet-Endgeräts 20 von der Tastatur 30 und die Einrichtung 35 der Tastatur 30 zum Abgeben von Energie an das Internet-Endgerät 20 können Energie von der Tastatur 30 an das Internet-Endgerät 20 übertragen.

Die Einrichtung 32 der Tastatur 30 zur Kopplung des Internet-Endgeräts 20 ist vorzugsweise so ausgeführt, dass das Internet-Endgerät 20 in der Bewegungsrichtung 42 um eine Achse schwenkbar ist, die im wesentlichen durch eine Schnittlinie einer ersten Ebene, die durch die Vielzahl der Tasten (31) bestimmt ist, und einer zweiten Ebene, die durch die Anzeige (21) bestimmt ist, festgelegt wird. Somit kann ein optimaler Blickwinkel auf die Anzeige 21 eingestellt werden. Die Einrichtung 32 der Tastatur 30 zur Kopplung des Internet-Endgeräts 20 umfasst weiterhin Mittel, die eine relative Lage des gekoppelten Internet-Endgeräts (20) und der Tastatur (30) beibehalten. Das System 10 kann den ergonomischen Bedürfnissen des Anwenders individuell angepasst werden.

Das System 10 ergibt somit eines vollwertiges Internet-Endgerät, das komfortables Arbeiten, auch bei schreibintensiven Tätigkeiten, ermöglicht und bei Ausstattung mit einer Speichereinrichtung auch das Speichern und spätere Abrufen dieser Informationen ermöglicht. Durch eine Entkopplung des Internet-Endgeräts 20 und der Tastatur 30 erhält der Benutzer wieder ein mobiles Internet-Endgerät 20, das über die berühungsempfindliche Anzeige 21 bedient werden kann.

## Patentansprüche

1. System (10), umfassend ein Internet-Endgerät (20) und eine koppelbare Tastatur (30), wobei:
das Internet-Endgerät (20), das vorzugsweise als WebPad ausgeführt ist, umfasst:
eine berührungsempfindliche Anzeige (21),
eine Einrichtung (22) zur Kopplung der Tastatur (30),
eine Einrichtung (23) zur Kommunikation mit der Tastatur (30), und
eine Einrichtung (24) zum Aufnehmen von Energie zum Betreiben
des Internet-Endgeräts (20) von der Tastatur (30), und
die Tastatur (30) umfasst:
eine Vielzahl von Tasten (31) zur Aufnahme von Eingaben eines Anwenders,
eine Einrichtung (32) zur Kopplung des Internet-Endgeräts (20), die so ausgebildet ist, dass der Anwender die Tasten (31) betätigen und
gleichzeitig die Anzeige (21) betrachten kann,
eine Einrichtung (33) zur Kommunikation mit dem Internet-Endgerät (20),
eine Einrichtung (34) zur Aufnahme von Energie aus einem Stromnetz, und
eine Einrichtung (35) zum Abgeben von Energie an das Internet-Endgerät (20).

2. System (10) nach Anspruch 1, wobei die Kommunikation zwischen dem Internet-Endgerät (20) und der Tastatur (30) kontaktlos erfolgt.

3. System (10) nach Anspruch 1 oder 2, wobei das Abgeben von Energie an das Internet-Endgerät (20) und das Aufnehmen der Energie von der Tastatur (30) kontaktlos erfolgt.

4. System (10) nach einem der Ansprüche 1 bis 3, weiterhin umfassend:
eine Basisstation, die zum Anschluss an ein Telefonnetz geeignet ist, zur
drahtlosen Kommunikation, vorzugsweise gemäß dem DECT-Standard,
wobei
das Internet-Endgerät (20) weiterhin umfasst:
eine Einrichtung (25) zur drahtlosen Kommunikation mit der Basisstation.

5. System (10) nach einem der Ansprüche 1 bis 4, wobei die Tastatur (30) weiterhin umfasst:
eine Einrichtung (36) zum Speichern von Energie.

6. System (10) nach einem der Ansprüche 1 bis 5, wobei die Einrichtung (32) zur Kopplung des Internet-Endgeräts (20) Mittel (37) umfasst, die das gekoppelte Internet-Endgerät (20) seitlich zumindest teilweise umschließen.

7. System (10) nach einem der Ansprüche 1 bis 6, wobei die Einrichtung (32) zur Kopplung des Internet-Endgeräts (20) Mittel umfasst, die ein Schwenken des Internet-Endgeräts (20) ermöglichen.

8. System (10) nach Anspruch 7, wobei eine Schnittlinie einer ersten Ebene, die durch die Vielzahl der Tasten (31) bestimmt ist, und einer zweiten Ebene, die durch die Anzeige (21) bestimmt ist, eine Achse im wesentlichen bestimmt, um die das Schwenken erfolgt.

9. System (10) nach einem der Ansprüche 1 bis 8, wobei die Einrichtung (32) zur Kopplung des Internet-Endgeräts (20) Mittel umfasst, die eine relative Lage des gekoppelten Internet-Endgeräts (20) und der Tastatur (30) beibehalten.

10. System (10) nach einem der Ansprüche 1 bis 9, wobei die Tastatur (30) weiterhin umfasst:
eine Einrichtung zum Speichern von großen Datenmengen, vorzugsweise ein Festplattenlaufwerk.

11. System (10) nach einem der Ansprüche 1 bis 10, wobei die Tastatur (30) weiterhin umfasst:
eine Einrichtung zum Einlesen von Daten und Programmen, vorzugsweise ein CD-ROM Laufwerk.

12. Internet-Endgerät (20) zur Verwendung in dem System (10) nach einem der Ansprüche 1 bis 11.

13. Tastatur (30) zur Verwendung in dem System (10) nach einem der Ansprüche 1 bis 11.
